# EUROPEAN PATENT SPECIFICATION

(11) **EP 1 260 400 B1**
(45) Date of publication and mention of the grant of the patent: **02.08.2006**
(21) Application number: 02380103.8
(22) Date of filing: 22.05.2002
(51) Int. Cl.: B60K 15/05

(54) **Lid**
Deckel
Couvercle

(30) Priority: 24.05.2001 ES 200101192
(43) Date of publication of application: 27.11.2002
(73) Proprietor: Maier, S. Coop., 48300 Ajangiz (Bizkaia) (ES)
(72) Inventor: Mandaluniz Bilbao, Joseba, 48300 Ajangiz (Bizkaia) (ES)
(74) Representative: Urteaga Simarro, José Antonio

(56) References cited:
- EP-A- 0 760 306
- US-A- 4 527 825
- US-A- 4 782 978

## Description

### Purpose of the invention

The invention concerns a fuel lid unit that can be used widely in industry, particularly in the automobile industry, as a fuel lid for motor vehicles, for example.

In the automobile industry, most fuel lid units are opened by the user inserting a finger in a specially designed slot and pulling upwards to release an internal mechanism connected to a base that is usually concealed. The lid is closed by the user pressing down on it.

The current trend is for fuel lid units to be designed in such a way that no slots or grooves are visible on the lid surface and for the lid to be opened and closed simply by the user pressing down on it.

The patents US-A-4.782.978, US-A-5.044.678, EP-A-0.846.585 and FR-A-2.731.391 are examples of lids with these characteristics.

US-A-4.782.978 is considered as being the closest prior art.

US-A-5.044.675 proposes a lid unit equipped with a complicated internal mechanism incorporating a solenoid and other parts, which also make the end product expensive to manufacture.

The fuel lid in EP-A-0.846.585 is activated by a push/push locking mechanism. When the lid is pressed it opens partially. The user then inserts a finger to lift the lid up fully.

In FR-A-2.731.391 a solenoid and meshing device is also used with the lid being opened partially when it is pressed down from the outside.

The basic objective of the invention is to provide a lid that is extremely simple to operate and very cheap to manufacture, with a minimal number of parts and which is activated by pressure being applied to it and which can, in addition, be adapted to any known lid of this type.

To achieve these objectives the lid, according to this invention, claims the existence of only three components: a lid; a body base plate for the lid and a lid control and opening mechanism, generally a spring.

The invention also claims the incorporation of a slow lid-release system.

According to the invention, the lid unit, as disclosed by the features of independent claim 1, consists of a body, generally concealed, which is housed in a suitable cavity, in the bodywork of the vehicle, for example. This body-base has an opening that forms an outer plane or edge and into which the lid in question will be fitted.

This body-base consists of two distinct sections. One is hollow and empty, as is the case when it is used as a fuel lid. The other section is lateral or adjacent to it and houses the parts that connect to the lid itself. This arrangement is also a conventional one as it forms part of the structures in the aforementioned references US-A-5.044.678, EP-A-0.846.585 and FR-A-2.731.391.

According to this invention, the adjacent side section is a prismatic area that is closed off on the outside to create an internal cavity. This adjacent section can form an single unit with the body-base. It can also be an independent unit that forms a unit with the body-base when properly attached to it with a clip. In both cases two side walls are formed facing each other in which two vertical oval apertures are made in line with each other.

The lid in question has a mainly flat section that fits into the edge formed by the body-base, with a visible upper face and a hidden lower face. Another section, in the form of a strip of metal of a certain width, projects out of the lower face. The strip forms a hinge that is commonly known as a swan neck. It forms a rounded oblique convex shape that points downwards. Its free end is located on a plane underneath the plane of the surface panel. At its end is an area we shall term a shaft, which projects outwards very slightly to form two cylindrical pins at either end.

An elevated longitudinal part protrudes from the central section of the shaft to form a cam. The surface of the cam, running from the side to the lid, is convex, rounded and points towards the lid. On its upper edge a vertical plane, with another smaller plane at its base, projects out towards the other side, with an angle of approximately 90° being formed between both planes.

The two end pins on the shaft are housed inside the oval apertures in the body-base, enabling both pins to move up and down inside them.

The interior of the adjacent section of the body-base has, logically, a similar width to that of the swan neck. Its upper face consists of a stepped section at an angle of approximately 90°, which, once the swan neck has been housed inside, is located in the area of shaft cam of the lid. The section adjacent to the body-base is also to be found in this internal section, in a lower position, housed within a very low cavity.

The swan neck of the lid projects outwards and downwards. Two ribs protrude from where its shaft is located. The ribs are held parallel by a small shaft to which one end of a spring, in the form of a loop, is attached. The other end of the spring is free.

The free end of said spring is introduced into the lower housing of the body-base, where it is then secured. The two ends of the shaft cam are inserted into the oval apertures of said body-base and the angled area meets up, at an angle of 90° from the cam, with the stepped section, also at an angle of 90°, of the upper part of the body-base.

The spring is housed in tension, i.e. it possesses elastic potential energy. This is the result of it being moving towards the area of the cam, swan neck and lid, with the angled area of the cam adjusted to the upper internal stepped section of the body-base.

This position corresponds with that of the lid when it is in a depressed position on the open upper edge of the body-base, a position it maintains in static equilibrium until it is the object of an opposite action.

To release the lid when it is closed or in a depressed position, pressure is applied on the outside part of the lid at the base of the hinge or swan neck. This forces the shaft and the cam down, releasing the connection with the stepped section of the body-base.

At the same time, the ends of the shaft pass through the two oval apertures in the body-base, being guided as they do so by the end pins of the shaft.

In this position, the spring that stores the resulting elastic potential energy, when it is compressed, pushed the swan neck by means of the small shaft positioned between the ribs of the swan neck, pressing it in a rotational direction along with the lid. This rotation is controlled and takes place within the oval aperture.

The distance between the two positions of the shaft centre in the oval apertures, with the lid closed and with the lid open after pressure has been applied on it, will be approximately equal to the height of the upper stepped section of the body-base and will also be the same as the height of the vertical cam wall.

When the lid is pressed in a rotational direction the rounded part of the cam makes contact with the lower surface of the body-base adjacent to the stepped section, guiding said rotation and ensuring that the rotation is completed smoothly and without jerking.

Once open, the lid is closed by turning it from the outside, thus exerting pressure on the spring until the shaft cam and the stepped section of the body-base come into contact again and lock in position to keep the lid closed.

The lid reaches a certain opening angle, which can be pre-set, without any significant problem.

The width of the metal strip forming the hinge will determine the force to be applied on the lid for it to open. The wider this strip is, the greater the force that needs to be applied.

The invention also considers slowing down the movement of the lid when it opens, particularly in the period immediately after it is opened, thus avoiding sharp, jerking movements. This slow-action opening can be achieved in a number of ways, using different parts in different locations.

For example, a metal strip could be created in the spring by pressing or stamping, forming a rounded protrusion projecting out from the internal face and acting as a kind of cam would slow the opening action down.

Another solution could be to fix a second smaller spring inside the body-base to act against the other spring. This second spring would be activated at the beginning of the opening action and at the end of the closing action.

There is also the possibility of acting on the two cylindrical ends of the rotating shaft cam housed in the oval apertures of the body-base by covering them with elastomer layers or attached parts. This would, for example, reduce the force of the lid rotation.

These attached parts, either separately or in combination with the aforementioned parts, could be positioned on the spring's small rotating shaft in between the ribs of the swan neck.

All these and other aspects of the invention can be seen in greater detail in the attached drawings, where the following are shown, without any restrictive nature:
Figure 1 is a view of the fuel lid unit according to the invention.
Figure 2 is a side elevation of Figure 1.
Figure 3 is a view of the lid in question and the spring or metal strip unit (8) according to the invention.
Figure 4 is a cross section view along I-I in Figure 1.
Fig. 5 is an enlarged detail of position (5) in Figure 2.
Figure 6 is an enlarged detail of position (M) in Figure 4.
Figure 7 represents the initial movement of the lid when pressure (N) is applied on its exterior.
Figure 8 is a view of another position of the lid following on from the position detailed in Figure 7.
Figure 9 is the lid in another position following on from the position detailed in Figure 8.
Figures 10 to 13 show some of the alternative methods employed to slow down the lid opening action.

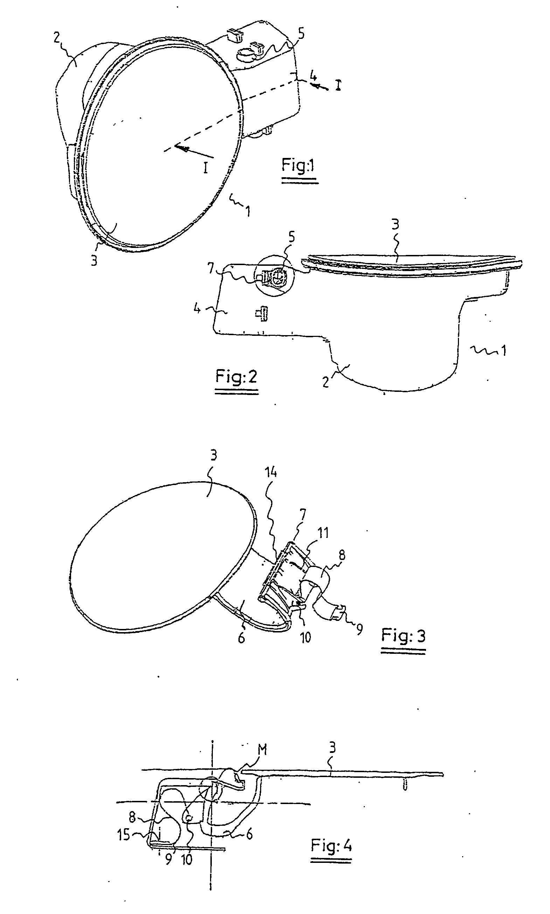

Figures 1 and 2 show a body-base (2) attached to an adjacent side section (4). As stated earlier the body-base (2) and the adjacent section (4) can also be two independent units connected to each other by a clip. The body-base (2) is, in this case, hollow, and the side section (4) houses the mechanism that activates the opening and/or closure of the lid (3), which closes, in existing units, the upper edge of the body-base (2). Both oval apertures (5) can be seen in the opposite sides in the section (4), or, where appropriate, in the sides of the body-base (2).

When the unit is assembled, sections (2, 4) are usually concealed. The only visible feature is the lid (3).

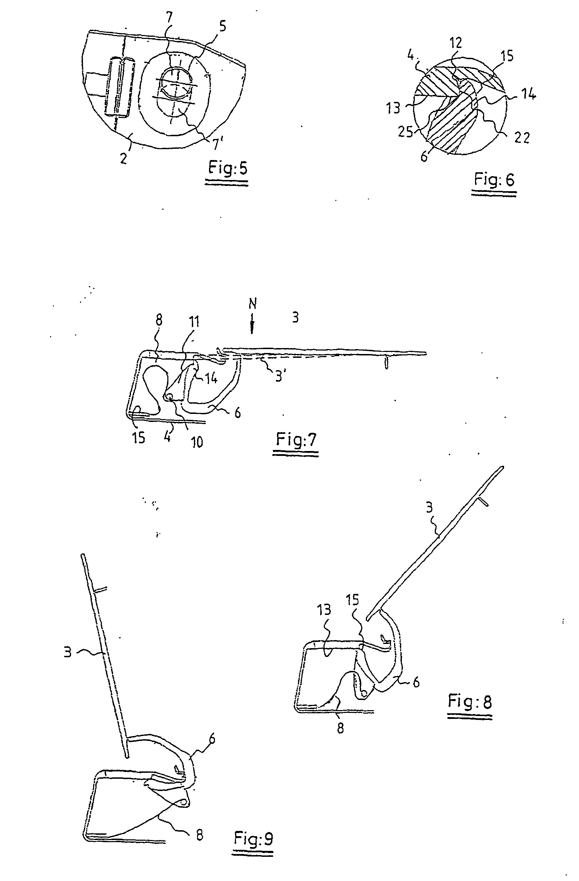

The lid (3), Figure 3, is attached to the concave swan neck (6), with the concave section pointing inwards, and has a shaft at one end located on a lower plane than the surface plane of the lid (3). The shaft has cylindrical ends (7) and a central section or cam (14), which has an elevated section, figure 6, with a rounded surface (15) which runs up to the lid (3) and a flat vertical surface (22) which finishes at its lower end in another surface area (25) that forms an angle of approximately 90° with the former. On the outer side of the swan neck (6), and underneath the shaft, can be seen two ribs (11) between which the small shaft (10) is positioned. This acts as a base for the spring (8), in the form of a loop, which at its free end (9) can be attached to a fixed point.

This lid, with the spring (8) attached, is located in the opening of the body (2) in such a way that all the unit components are housed inside the sections (4) and (2), as detailed in figure 4, bearing in mind that the section (4) can either be independent of the body-base (2) and connected to it with a clip or can form an integral part of it. Figure 4 shows the internal fitting (15) that secures the end of the spring (8) and the upper area (M), also internal, of the section (4) that is connected to the lid. It is in this position that the lid (3) is pressed down to close off the opening (21).

In addition to this closed position figure 5 also shows the position of the ends (7) of the shaft cam in the oval apertures (5) of the adjacent section (4), which in this case are cut into the body-base (2) itself.

In this position, and as detailed in Figure 6, we can see the fitting and the connection between the stepped section (12, 13) of the interior of the adjacent section and the angular section (23, 25) of the cam (14), being correctly housed in it in such a way that it is held in place by the spring (8), provided there is no outward pressure exerted against it.

If at a given moment, and as suggested in figure 7, the user applies pressure (N) on the lid (3) in this area, the movement of the lid pushes the swan neck (6) and the cam itself (14) down. As a result, the surface (22) of the cam loses contact with the surface (13) of the stepped section, overcoming the resistance of the spring (8) and the minimal resistance of the conventional coupling of the opening to the base-body (2).

The distance the cam (14) travels is the same, logically, as the distance travelled by the shaft (7) to (7') in the lateral oval apertures (5), with this distance being the same or slightly less than the distance travelled by the lid (3).

This movement is sufficient to release the initial housing, shown in Figures 4 and 6, of the shaft (7) cam (14), as can be seen in Figure 7.

In this movement the ends (7) of the shaft have moved from the position (7) in the oval aperture (5), figure 5, to the lower position (7'). This means that once pressure has stopped being exerted on it, the spring (8), from this position, pushes the swan neck (6), thus opening the lid (3).

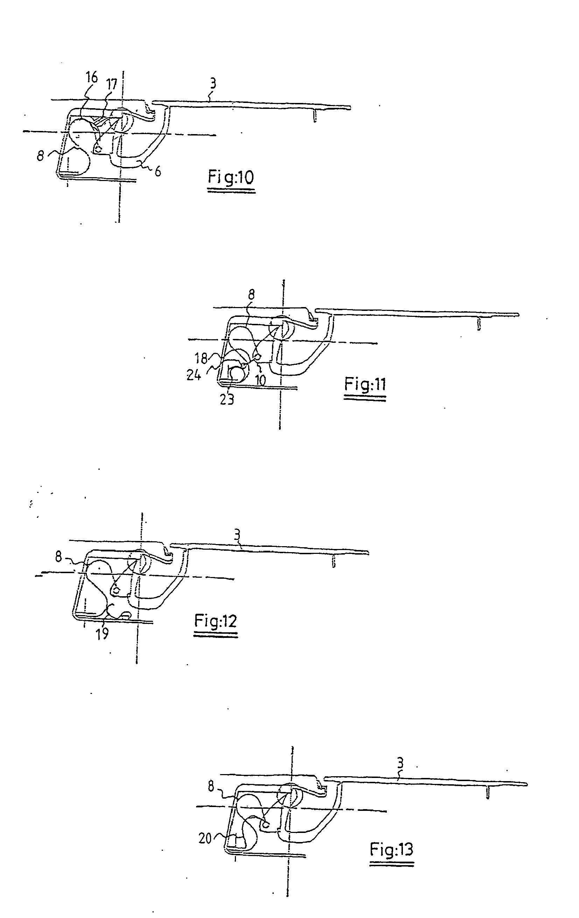

The cam (14) rotates smoothly, both because the ends (7) are inserted in the oval apertures (5) and because the rounded area (15) of the cam (14) makes gentle contact with the internal surface (13) of the section (4) of the body-base, as detailed in figures 8 and 9, in which the spring (8) can be seen extending gradually until the lid (3) is fully open.

In order to close the lid again it must be pressed down until it clicks back into position and the cam (14) and the stepped section (12) of the adjacent section (4) link up once more, with the lid being securely housed in the opening of the body-base (2).

The invention also contemplates, as mentioned earlier, slowing down the movement of the lid when it opens.

Figure 10 thus shows the metal strip (16) created in the spring (8) by pressing or stamping. The spring makes contact with the protrusion (17) on the upper internal surface of the adjacent section (4), to create a delay, which allows the spring to move out when this protrusion acts as a cam.

Figure 11 details a variation of the invention with the metal strip section (23) also projecting out from the spring (8) itself, and with a component (18) connected to the spring shaft (10), which passes through the space created by the aforementioned metal strip section (23).

The solution considered in figure 12 uses a support spring (11), which resists being extended when it rests on the surface of the spring (8).

The solution considered in figure 13 also employs a longitudinal section (20) projecting out laterally from the spring (20) itself, the action of which resists the action of the spring (8) being extended, thus slowing down the opening action effectively.

As mentioned above there are other possible methods of slowing down the lid release, which have not been presented because they are already known.

By way of example, a traditional spring of the type used in clothes pegs could be attached to the small shaft (10) to hold the end of the spring (8) in place.

A spiral could also be attached to the spin axis of the cam, the action of which could be slowed down by adding a viscous liquid.

It is preferable that the two basic features of the invention -the body (2, 4) the lid (3, 6)- are made of a plastic material. Both parts can either be made of the same or different types of material.

## Claims

1. A lid unit to be used generally but not exclusively in motor vehicles, consisting of a body-base (2) with an opening (21), which opens outwards, and a closed adjacent section (4) with both parts either forming a single unit or connected together by a clip and usually housed or concealed in a part of the vehicle, the unit also having a lid (3), which opens or closes in relation to the aforementioned opening when external pressure is applied on it, the unit having the following features:
- the lid (3) having a curved-concave swan neck (6), which points upwards and projects out from its lower face, with its free end extending in a plane below the surface plane of the lid, the swan neck being housed inside the adjacent section and being no wider than the interior width of said adjacent section, enabling it to rotate within this space when pressure is exerted on the lid,
- the free end of the swan neck (6) being a straight cylinder (7), which acts as a shaft, with a central section (14), which acts as a cam, the cam consisting of an elevated longitudinal section which points upwards, the longitudinal upper edge forming a rounded convex shape and extending outwards (15) at the side of the lid (3) and in a vertical plane (22) on the opposite side, this latter plane having another smaller plane (25) at its base, forming an angle of approximately 90°, in which the free ends of the shaft (7) are designed to assist the rotation of the lid (3) when housed in the vertical and opposite oval apertures (5) cut into the parallel faces of the adjacent section, enabling them to move up and down in the aforementioned oval apertures,
- a stepped section (12) inside the adjacent section, on its upper face (13), on a plane level with that of the oval apertures (5), the stepped section (12) being at an angle of approximately 90° and receiving the angular section of the cam (14) planes (12, 25) when the lid is in a closed position, this connection being released when pressure is exerted on the lid (3),
- the swan neck (6) having parallel ribs (11) that project outwards below the position of the shaft (7), a small shaft (10) located between the ribs, one end of a spring (8), in the form of a loop being attached to this shaft, the other end (9) of the spring being secured inside in a cavity (15) formed in the lower internal face of the adjacent section (4) and in which said spring maintains the connection between the cam (14) and the stepped section (12) of the adjacent section when the lid (3) is in a closed position, the spring also forcing the lid's swan neck (6) when external pressure is applied to it.

2. The lid unit according to claim 1 wherein the system has the means to slow down the opening action of the lid (3) by delaying the extension of the spring (8) when it is freed.

3. The lid unit according to claim 2 wherein a metal strip (16) projects upwards in a convex shape out from the spring (8) itself to make contact with a rounded protrusion (17) on the upper interior part of the adjacent section (4), by way of a cam.

4. The lid unit according to claim 2 wherein a metal strip (23) that bends downwards to form a connected loop that then projects upwards, projects out from the lower section of the spring (8) making contact with an arm (18) that crosses the opening made by the projection (23) to connect up with one end of the spring (8) shaft (10), while the other end (24) is supported on the aforementioned metal strip.

5. The lid unit according to claim 2 wherein a second spring (19), attached to the internal lower face of the adjacent section (4) makes contact with the spring (8) and acts against it.

6. The lid unit according to claim 2 wherein the spring (8) has a continuous, central longitudinal opening, the central section (20) of which is doubled back to act against the spring.

7. The lid unit according to claim 1 wherein, preferably, the lid (3), the hinge or swan neck (6) and the cam (14) form a single unit.

8. The lid unit according to claim 1 wherein the body-base (2), the adjacent section (4) and the lid (3) are all made of plastic.

9. The lid unit according to claim 8 wherein the same material is used to manufacture the body (2, 4) and the lid (3,6).

10. The lid unit according to claim 8 wherein different materials are used to manufacture the lid (3, 6) and the body (2, 4).

## Patentansprüche

1. Eine Deckel-Einheit zur allgemeinen, aber nicht ausschließlichen Verwendung in Motorfahrzeugen, bestehend aus einem Gehäuseboden (2) mit einer Öffnung (21), die sich nach außen hin öffnet, und einem geschlossenen, angrenzenden Abschnitt (4), wobei beide Teile entweder eine einzelne Einheit bilden oder durch eine Klemme miteinander verbunden sind, und gewöhnlich in einem Teil des Fahrzeugs untergebracht oder verborgen sind, wobei die Einheit auch einen Deckel (3) besitzt, der sich in Abhängigkeit von der oben erwähnten Öffnung öffnet oder schließt, wenn äußerer Druck auf ihn ausgeübt wird, wobei die Einheit folgende Merkmale aufweist;
o dabei hat die Deckel-Einheit einen gekrümmt-konkaven Schwanenhals (6), der nach oben zeigt, und die längs verlaufende obere Kante bildet eine abgerundete, konvexe Form und erstreckt sich nach außen (15) auf der Seite des Deckels (3) und in einer vertikalen Ebene auf der entgegen gesetzten Seite, wobei besagte Ebene eine andere, kleinere Ebene (25) an ihrer Basis aufweist, wobei sie einen Winkel von etwa 90° bildet, an dem die freien Enden des Schafts (7) dazu dienen sollen, die Rotation des Deckels (3) zu unterstützen, wenn er in den vertikalen und entgegen gesetzten ovalen Öffnungen (5) untergebracht ist, die in die parallelen Seiten des angrenzenden Abschnitts geschnitten sind, wodurch er in die Lage versetzt wird, sich nach oben und nach unten in den oben erwähnten ovalen Öffnungen zu bewegen,
o dabei gibt es einen abgestuften Abschnitt (12) innerhalb des angrenzenden Abschnitts, auf dessen Oberseite (13), auf der gleichen Ebene mit jenem der ovalen Öffnungen (5), wobei der abgestufte Abschnitt (12) in einem Winkel von etwa 90° liegt und den winkelförmigen Abschnitt der Ebenen (12, 25) des Nockens (14) aufnimmt, wenn der Deckel sich in einer geschlossenen Position befindet, und diese Verbindung gelöst wird, wenn Druck auf den Deckel (3) ausgeübt wird,
o dabei weist der Schwanenhals parallele Rippen (11) auf, die nach außen hervorragen, unterhalb der Position des Schafts (7), wobei sich ein kleiner Schaft (10) zwischen den Rippen befindet, und eines der Enden einer Feder (8) in Form einer Schlaufe an diesen Schaft befestigt ist, und das andere Ende (9) der Feder innerhalb eines Hohlraums (15) befestigt ist, der an der unteren Innenseite des angrenzenden Abschnitts (4) gebildet wird, und in dem besagte Feder die Verbindung zwischen dem Nocken (14) und dem abgestuften Abschnitt (12) an dem angrenzenden Abschnitt aufrecht erhält, wenn der Deckel (3) sich in einer geschlossenen Position befindet, wobei die Feder auch gegen den Schwanenhals (6) des Deckels drückt, wenn äußerer Druck auf ihn ausgeübt wird.

2. Die Deckel-Einheit gemäß Anspruch 1, bei der das System die Mittel dazu besitzt, die Aktion des Öffnens an dem Deckel (3) zu verlangsamen, indem die Dehnung der Feder (8) verzögert wird, wenn sie befreit wird.

3. Die Deckel-Einheit gemäß Anspruch 2, bei der ein Metallstreifen (16) nach oben in einer konvexen Form aus der Feder (8) selbst herausragt, um den Kontakt mit einem abgerundeten Vorsprung (17) an der oberen Innenseite des angrenzenden Abschnitts (4) mit Hilfe eines Nockens herzustellen.

4. Die Deckel-Einheit gemäß Anspruch 2, bei der ein Metallstreifen (23), der sich nach unten biegt, um eine damit verbundene Schlaufe zu bilden, die dann nach oben von dem unteren Abschnitt der Feder (8) herausragt, und dabei den Kontakt mit einem Arm (18) herstellt, der die Öffnung kreuzt, die durch der Vorsprung (23) entsteht, um die Verbindung mit einem der Enden des Schafts (10) der Feder (8) herzustellen, während das andere Ende (24) durch den oben erwähnten Metallstreifen gestützt wird.

5. Die Deckel-Einheit gemäß Anspruch 2, bei der eine zweite Feder (19), die an der inneren unteren Seite des angrenzenden Abschnitts (4) angebracht ist, den Kontakt mit der Feder (8) herstellt und gegen sie wirkt.

6. Die Deckel-Einheit gemäß Anspruch 2, bei der die Feder (8) eine durchgehende, zentrale längs verlaufende Öffnung besitzt, deren zentraler Abschnitt (20) zusammengefaltet ist, um gegen die Feder zu wirken.

7. Die Deckel-Einheit gemäß Anspruch 1, bei der vorzugsweise der Deckel (3), das Gelenk oder der Schwanenhals (6) sowie der Nocken (14) eine einzelne Einheit bilden.

8. Die Deckel-Einheit gemäß Anspruch 1, bei der der Gehäuseboden (2), der angrenzende Abschnit (4) und der Deckel (3) aus Kunststoff bestehen.

9. Die Deckel-Einheit gemäß Anspruch 8, bei der das gleiche Material zur Herstellung des Gehäuses (2, 4) und des Deckels (3, 6) verwendet wird.

10. Die Deckel-Einheit gemäß Anspruch 8, bei der verschiedene Materialien zur Herstellung des Deckels (3, 6) und des Gehäuses (2, 4) verwendet werden.

## Revendications

1. Une unité de couvercle à utiliser généralement mais pas exclusivement sur les véhicules à moteur, qui comporte un corps (2) avec un orifice (21) qui s'ouvre vers l'extérieur, et une section adjacente fermée (4) avec les deux parties qui forment une unité seule ou reliées ensemble avec un clip et généralement logées ou fixées dans une partie du véhicule, l'unité comporte aussi un couvercle (3), qui s'ouvre ou se ferme en rapport avec l'ouverture indiquée ci-dessus, lorsqu'une pression externe lui est appliquée, l'unité a les caractéristiques suivantes
- l'unité du couvercle (3) a un col de cygne courbe-concave (6) dont les points sont placés vers le haut et se projettent à partir de sa face inférieure, sa face libre s'étendant sur un plan au-dessous de la surface plate du couvercle, le col de cygne étant logé à l'intérieur d'une section adjacente et n'étant pas plus large que la largeur intérieure de cette section adjacente, ce qui lui permet de tourner dans cet espace lorsque la pression est exercée sur le couvercle,
- l'extrémité libre du col de cycle (6) étant un cylindre droit (7), qui agit comme un axe, avec une section centrale (14) qui agit comme une came, la came étant une section longitudinale élevée pointée vers le haut, le bord supérieur longitudinal formant une forme convexe arrondie et s'étendant vers l'extérieur (15) sur le côté du couvercle (3) et sur un plan vertical (22) sur le côté opposé, ce dernier plan ayant un autre plan plus petit (25) à la base, formant un angle de 90° environ, dans lequel les extrémités libres de l'axe (7) sont conçues pour assister la rotation du couvercle (3) lorsqu'elles sont logées dans les ouvertures ovales verticales et opposées (5) pratiquées dans les faces parallèles de la section adjacente, leur permettant de se déplacer vers le haut et vers le bas dans les ouvertures ovales mentionnées ci-dessus.
- une section épaulée (12) à l'intérieur de la section adjacente, sur sa face supérieure (13), sur un niveau plan avec celui des ouvertures ovales (5), cette section épaulée (12) étant à un angle d'environ 90° et accueillant la section angulaire des plans (12, 25) de la came (14) lorsque le couvercle est en position fermée, cette connexion étant relâchée lorsque la pression est exercée sur le couvercle (3),
- le col de cygne (6) ayant des épaulements parallèles (11) qui se projettent vers l'extérieur au-dessous de la position de l'axe (7), un petit axe (10) étant situé entre les épaulements, une extrémité d'un ressort (8) en forme de boucle étant fixée dans cet axe, l'autre extrémité (9) du ressort étant fixée à l'intérieur d'une cavité (15) formée dans la face interne inférieure de la section adjacente (4) et dans laquelle ce ressort conserve la connexion entre la came (14) et la section épaulée (12) de la section adjacente lorsque le couvercle (3) est en position fermée, le ressort forçant aussi le col de cygne du couvercle (6) lorsque la pression extérieure est appliquée dessus.

2. L'unité de couvercle conformément à la revendication 1 où le système a les moyens de ralentir l'action d'ouverture du couvercle (3) en retardant l'extension du ressort (8) lorsqu'il est libéré.

3. L'unité de couvercle conformément à la revendication où une bande métallique (16) est projetée vers le haut dans une forme convexe hors du ressort même (8) pour entrer en contact avec une protubérance arrondie (17) sur la partie intérieure supérieure de la section adjacente (4) au moyen d'une came.

4. L'unité de couvercle conformément à la revendication 2 où une bande métallique (23) qui est courbée vers le bas pour former une boucle connectée qui se projette ensuite vers le haut, se projette hors de la section inférieure du ressort (8) en entrant en contact avec un bras (18) qui traverse l'orifice fait par la projection (23) pour le connecter avec une extrémité de l'axe (10) du ressort (8), tandis que l'autre extrémité (24) est supportée sur la bande métallique indiquée ci-dessus.

5. L'unité de couvercle conformément à la revendication 2 où un second ressort (19), fixé sur la face inférieure interne de la section adjacente (4) entre en contact avec le ressort (8) et agit contre lui.

6. L'unité de couvercle conformément à la revendication 2 où le ressort (8) a une ouverture continue, centrale et longitudinale dont la section centrale (20) est recourbée pour agir contre le ressort.

7. L'unité de couvercle conformément à la revendication 1 où, de préférence, le couvercle (3) la charnière ou le col de cygne (6) et la came (14) forment une unité isolée.

8. L'unité de couvercle conformément à la revendication 1 où le corps (2), la section adjacente (4) et le couvercle (3) sont fabriqués en plastique.

9. L'unité de couvercle conformément à la revendication 8, où le même matériau est utilisé pour fabriquer le corps (2, 4) et le couvercle (3,6).

10. L'unité de couvercle conformément à la revendication 8, où différents matériaux sont utilisés pour fabriquer le couvercle (3, 6) et le corps (2, 4).
